(19) Europäisches Patentamt / European Patent Office / Office européen des brevets

(11) **EP 3 610 646 B1**

(12) **EUROPEAN PATENT SPECIFICATION**

(45) Date of publication and mention
of the grant of the patent:
**11.06.2025 Bulletin 2025/24**

(21) Application number: **17740133.8**

(22) Date of filing: **27.04.2017**

(51) International Patent Classification (IPC):
$H04N\ 19/105^{(2014.01)}$    $H04N\ 19/593^{(2014.01)}$
$H04N\ 19/11^{(2014.01)}$    $H04N\ 19/182^{(2014.01)}$

(52) Cooperative Patent Classification (CPC):
**H04N 19/593; H04N 19/597**

(86) International application number:
**PCT/RU2017/000271**

(87) International publication number:
**WO 2018/199793 (01.11.2018 Gazette 2018/44)**

(54) **GEODESIC INTRA-PREDICTION FOR PANORAMIC VIDEO CODING**

GEODÄTISCHE INTRAPRÄDIKTION FÜR PANORAMAVIDEOCODIERUNG

INTRAPRÉDICTION GÉODÉSIQUE DESTINÉE AU CODAGE VIDÉO PANORAMIQUE

(84) Designated Contracting States:
**AL AT BE BG CH CY CZ DE DK EE ES FI FR GB GR HR HU IE IS IT LI LT LU LV MC MK MT NL NO PL PT RO RS SE SI SK SM TR**

(43) Date of publication of application:
**19.02.2020 Bulletin 2020/08**

(73) Proprietor: **HUAWEI TECHNOLOGIES CO., LTD. Shenzhen, Guangdong 518129 (CN)**

(72) Inventor: **IKONIN, Sergey Yurievich Guangdong Shenzhen 518129 (CN)**

(74) Representative: **Körber, Martin Hans et al Mitscherlich PartmbB Patent- und Rechtsanwälte Karlstraße 7 80333 München (DE)**

(56) References cited:
**WO-A2-2008/114264    JP-A- 2013 046 270 US-A1- 2016 142 697**

• "High Efficiency Video Coding (HEVC)", vol. 29, 1 August 2014, SPRINGER INTERNATIONAL PUBLISHING, ISBN: 978-3-319-06894-7, article JANI LAINEMA ET AL: "Chapter 4 Intra-Picture Prediction in HEVC", pages: 91 - 112, XP055292569, DOI: 10.1007/978-3-319-06895-4_4

## Description

## TECHNICAL FIELD

The present application relates to the field of video coding, and more particularly to a video encoder, video system, and related methods and computer programs.

## BACKGROUND

360-degree video or spherical video is a new way of experiencing immersive video using devices such as head-mounted displays (HMD). This technique can provide an immersive "being there" experience for consumers by capturing a full panoramic view of the world. 360-degree video is typically recorded using a special rig of multiple cameras, or using a dedicated virtual reality (VR) camera that contains multiple embedded camera lenses. The resulting footage is then stitched to form a single video. This process may be done by the camera itself, or by using video editing software that can analyze common visuals to synchronize and link the different camera feeds together to represent the full viewing sphere surrounding the camera rig. Essentially, the camera or the camera system maps a 360° scene onto a sphere.

The stitched image (i.e. the image on the surface of the sphere) is then mapped (or unfolded) from spherical into a two-dimensional (2D) rectangular representation based on projection (such as equirectangular projection), and then encoded using e.g., standard video codecs such as H.264/AVC (Advanced Video Coding) and HEVC/H.265 (High Efficiency Video Coding).

At the viewing end, after decoding the video is mapped onto a virtual sphere with the viewer located at the center of the virtual sphere. The viewer can navigate inside the virtual sphere to see a view of the 360-degree world as desired and thereby have an immersive experience.

To reduce the bit-rate of video signals, the International Organization for Standardization (ISO) and International Telecommunication Union (ITU) coding standards apply hybrid video coding with inter-frame prediction and intra-frame prediction combined with transform coding of a prediction error. For example, intra-block prediction based on the intensity values of reference pixels from already encoded surrounding blocks may be used. Then, the intensity difference between the original block and a predicted block (called residual) may be transformed to the frequency domain using, e.g., discrete cosine transform (DCT) or discrete sine transform (DST), quantized, and coded with entropy coding.

Currently, the intra-frame prediction mechanism in video coding uses reference pixels located next to or near a block that needs to be encoded and generates a prediction signal for that block based on the intensity values of the reference pixels. The prediction signal is generated using a prediction mode which is signaled in the bitstream. The current video coding standards may use several (e.g., 33) directional modes (used to represent blocks containing edges and lines) as well as a DC mode and a planar mode. Accordingly, directional intra-frame prediction may be performed along a straight line of one of the possible (e.g., 33) directions.

In other words, the directional intra-prediction is currently performed along straight lines. During capturing of a 2D video, lines remain straight and having a prediction mechanism that takes advantage of this fact is reasonable. But during capturing of a 360-degree video and by unfolding to projection, straight lines may become distorted. E.g., for equirectangular projection straight lines become curved. Accordingly, conventional intra-frame prediction mechanisms may be inefficient for 360-degree or spherical video.

Effectiveness of the prediction influences the amount of residuals that need to be coded and transmitted. Accordingly, improving quality of prediction can reduce the amount of residual information and reduce the overall bit rate of a coded video sequence.

The expression "pixel value" means an intensity value of a pixel, i.e. an indication of an intensity of the pixel.

US 2016/142697 A1 introduces a motion compensation scheme for a inter prediction process. Jani Lainema ET AL: "Chapter 4 Intra-Picture Prediction in HEVC"In: "High Efficiency Video Coding (HEVC)", 1 August 2014 (2014-08-01), Springer International Publishing, XP055292569,ISBN: 978-3-319-06894-7vol. 29, pages 91-112, DOI: 10.1007/978-3-319-06895-4_4 discloses intra prediction of 2D projected 3D spherical video whereby the prediction blocks are transformed to compensate for the transformation.

## SUMMARY

This summary is provided to introduce a selection of concepts in a simplified form that are further described below in the detailed description. This summary is not intended to identify key features or essential features of the claimed subject matter, nor is it intended to be used to limit the scope of the claimed subject matter.

It is an object of the invention to provide improved video coding. The foregoing and other objects are achieved by the features of the independent claims. Further implementation forms are apparent from the dependent claims, the description and the figures.

The intra-prediction is adjusted to the geometry of spherical video, thereby allowing more efficient intra-prediction for spherical video. More efficient intra-prediction allows reducing the amount of residual information that needs to be encoded and transmitted, thus reducing the overall bit rate of an associated bit stream.

More efficient intra-prediction allows reducing the amount of residual information that needs to be encoded and transmitted, thus reducing the overall bit rate of an associated bit stream. Furthermore, there is no need to represent a curved line as a set of small straight lines, thus allowing savings in signaling overhead due to larger prediction blocks.

Furthermore, curved intra prediction can be achieved without explicit signaling of curvature parameters, thus further reducing the overall bit rate of the associated bit stream.

Many of the attendant features will be more readily appreciated as they become better understood by reference to the following detailed description considered in connection with the accompanying drawings.

## DESCRIPTION OF THE DRAWINGS

The present description will be better understood from the following detailed description read in light of the accompanying drawings, wherein:

Fig. 1A is a block diagram illustrating a video encoder according to an example;
Fig. 1B is a block diagram illustrating a video decoder according to an example;
Fig. 2A is a flow chart illustrating a method according to an example;
Fig. 2B is a flow chart illustrating a method according to an example;
Fig. 2C is a flow chart illustrating a method according to an example;
Fig. 2D is a flow chart illustrating a method according to an example;
Fig. 2E is a flow chart illustrating a method according to an example;
Fig. 3A is a flow chart illustrating a method according to an example;
Fig. 3B is a flow chart illustrating a method according to an example;
Fig. 3C is a flow chart illustrating a method according to an example;
Fig. 3D is a flow chart illustrating a method according to an example;
Fig. 3E is a flow chart illustrating a method according to an example;
Fig. 4 illustrates an example of a straight line to sphere projection;
Fig. 5 illustrates an example of great circles in equirectangular projection;
Fig. 6 illustrates an example of parallel lines to sphere projection;
Fig. 7 illustrates an example of intra-prediction along geodesic curves; and
Fig. 8 illustrates an example of using directional intra-prediction modes together with intra-prediction along geodesic curves.

Like references are used to designate like parts in the accompanying drawings.

## DETAILED DESCRIPTION

The detailed description provided below in connection with the appended drawings is intended as a description of the embodiments and is not intended to represent the only forms in which the embodiment may be constructed or utilized. However, the same or equivalent functions and structures may be accomplished by different embodiments.

In the following description, video coding arrangements and schemes are discussed in which at least a portion of intra-prediction operations are performed along a geodesic curve.

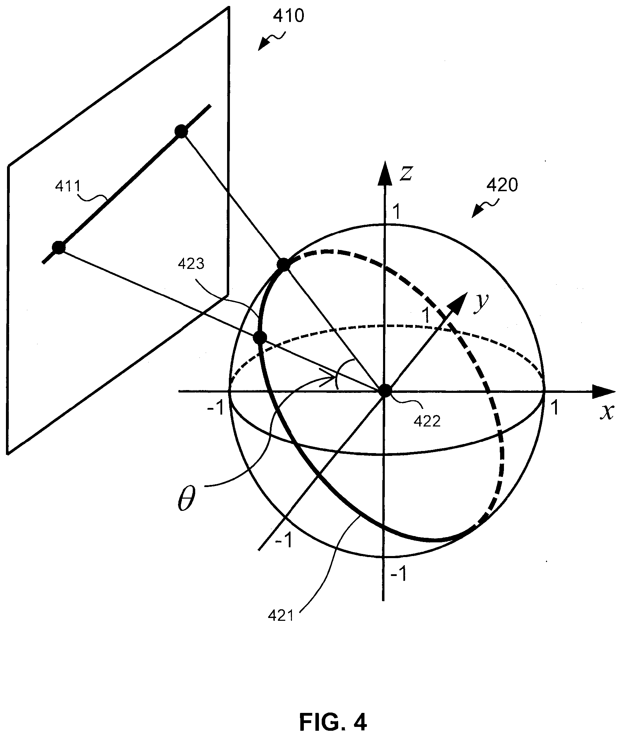

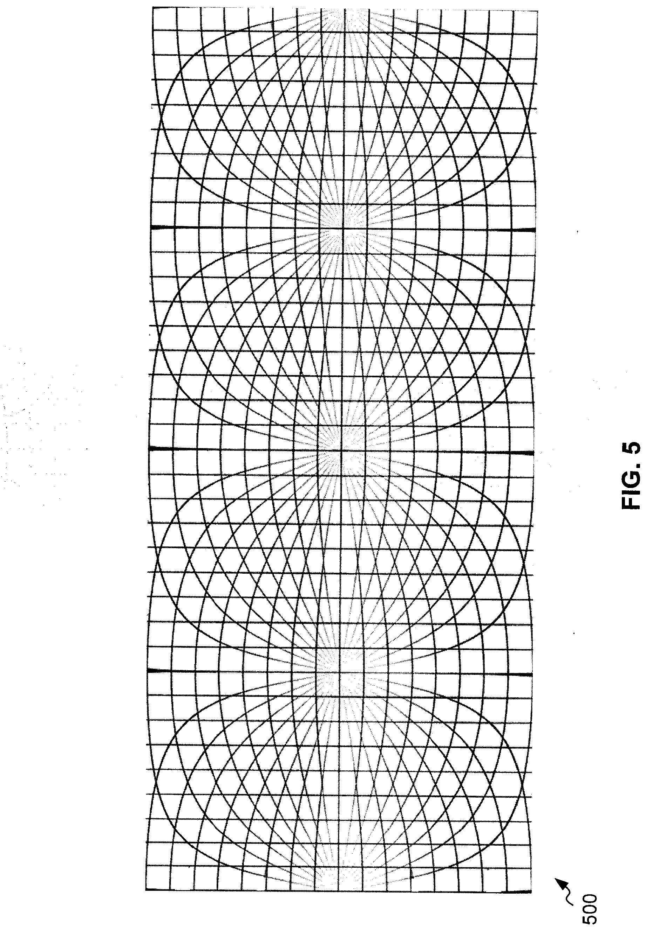

As illustrated in FIG. 4, a geodesic curve 421A is a projection of a straight line 411 of a scene 410 on a viewing sphere 420. More specifically, a geodesic curve is a part (i.e. arc 423) of a great circle 421. Great circle 421 is the intersection of the sphere and the plane defined by the straight line 411 and the sphere's center 422. FIG. 5 shows an example of great circles 500 with a spacing of 10 degrees, after unfolding from sphere to equirectangular projection. As shown in FIG. 5, straight lines become distorted in the equirectangular projected image.

From mathematics it is known that an infinite number of lines (or parts of circles or arcs) may pass through two points on a sphere. Only one of them is lying on a great circle. That means that once the position of two points of a line on a viewing sphere is known, one and only one geodesic curve can be determined coming through these two points. Parameters of curvature of this geodesic curve in the equirectangular projection (or any other type of sphere-to-2D projection) are completely defined by these two points and can be derived without explicit signaling.

In the following descriptions, a straight line is defined in a three-dimensional (3D) scene and projected onto a viewing sphere, thereby transforming the straight line into a curved intra-prediction line, i.e. a geodesic curve. Intra-prediction is performed along the intra-prediction line. More specifically, for each pixel to be predicted, a corresponding position in a reference area is obtained. This is done by passing the intra-prediction line over a current pixel to the reference area. Once the position of the current pixel is known and intra-prediction line is defined, the position in the reference area and a corresponding reference pixel value can be obtained. The reference pixel value can be taken as a predicted value (also referred to as the prediction value). Predicted values are used for subtracting from source values to obtain residuals that are then transformed and coded. It is to be noted that a reference position may be fractional in which case the prediction value may be interpolated from surrounding reference pixels on integer positions using a suitable interpolation method.

More generally, a straight line in the 3D scene may be projected onto any desired 2D projection of the 3D scene, e.g., onto a flat 2D map of the surface of the viewing sphere. Intra-prediction can thus be performed in any 2D representation of the surface of the viewing sphere.

Neighboring reference pixels, e.g., on the edge of a prediction block may be handled such that the same intra-prediction line (with the same curvature but just shifted) is also used for intra-prediction for all pixels (or for a group of pixels) in the prediction block. Alternatively, intra-prediction from a neighboring reference pixel may be done using an intra-prediction line derived from another straight line in the 3D scene.

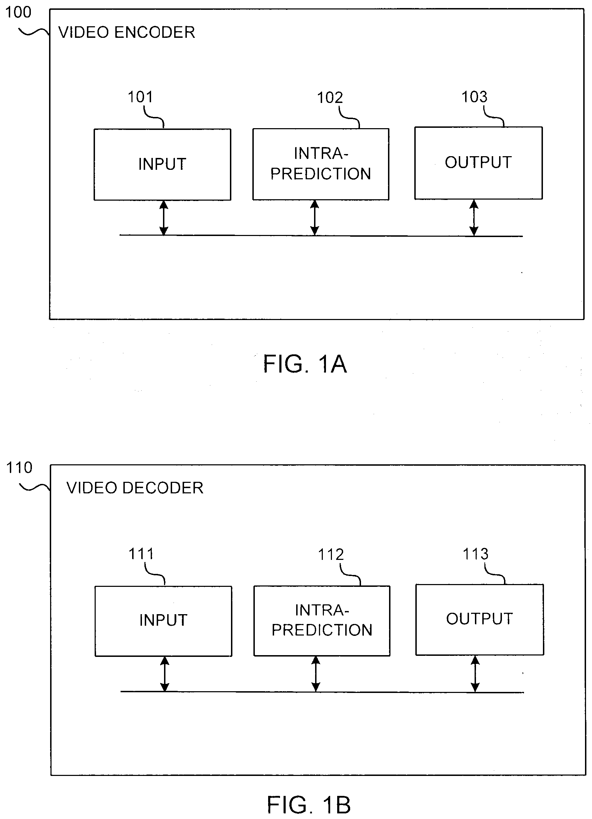

Fig. 1A is a block diagram that illustrates a video encoder 100 according to an example. The video encoder 100 may be implemented as a standalone device or it may be implemented as a part of another device, such as a digital video camera (including, e.g., 360-degree cameras and camera rigs) or the like. Furthermore, the video encoder 100 may be implemented as hardware (including but not limited to: a processor and/or a memory, and the like), software, or any combination of hardware and software.

The video encoder 100 comprises an input unit 101 that is configured to receive frames of spherical video. Each of the frames comprises blocks of pixels.

The video encoder 100 further comprises an intra-prediction unit 102 that is configured to generate a set of residuals for a current block to be encoded, by performing intra-prediction along a geodesic curve for the current block to be encoded.

The geodesic curve with its curvature corresponds to a straight line in a three-dimensional scene represented by the spherical video. Furthermore, the intra-prediction unit 102 is configured to perform the intra-prediction for a planar projection of the spherical video. Herein, a planar projection refers to a projection onto a plane, i.e. a projection onto a flat, non-curved surface.

The video encoder 100 further comprises an output unit 103 that is configured to provide an encoded bitstream based on sets of residuals generated by the intra-prediction performed on the blocks to be encoded. In addition to residuals related data, the bitstream may comprise, e.g., partitioning flags, prediction parameters, and the like.

Geodesic curves of different defined curvatures may be used in the intra-prediction for different pixels of the current block to be encoded. Additionally or alternatively, geodesic curves of identical defined curvatures may be used in the intra-prediction for different pixels of the current block to be encoded.

The intra-prediction unit 102 may be further configured to use a directional intra-prediction mode for choosing one or more parameters of the geodesic curve.

The intra-prediction unit 102 may be further configured to use a flag to indicate whether to perform the intra-prediction along the geodesic curve.

For example, a one-bit flag may be used to signal whether straight or geodesic prediction is used for a given directional mode. Such a scheme may be applied for all directional modes or for a restricted subset (e.g., by excluding vertical and horizontal directions).

In another example, for some modes from a predefined set (e.g., all modes except DC, planar, vertical and horizontal) intra-prediction is switched from straight lines to the geodesic prediction. Accordingly, no additional modifications in signaling mechanism are needed. Instead, interpretation of the existing signaling may be changed. For example, all angular modes (except DC and planar) may be replaced by the geodesic prediction.

Fig. 1B is a block diagram that illustrates a video decoder 110 according to an example. The video decoder 110 may be implemented as a standalone device or it may be implemented as a part of another device, such as a display device (including, e.g., a head-mounted display suitable for displaying virtual reality content) or the like. Furthermore, the video decoder 110 may be implemented as hardware (including but not limited to: a processor and/or a memory, and the like), software, or any combination of hardware and software.

The video decoder 110 comprises an input unit 111 that is configured to receive an encoded bitstream representing frames of spherical video. Each of the frames comprises blocks of pixels.

The video decoder 110 further comprises an intra-prediction unit 112 that is configured to determine a set of pixel values for a current block to be decoded, by performing intra-prediction along a geodesic curve for the current block to be decoded.

The geodesic curve with its curvature corresponds to a straight line in a three-dimensional scene represented by the spherical video. Furthermore, the intra-prediction unit 112 configured to perform the intra-prediction for a planar projection of the spherical video.

The video decoder 110 further comprises an output unit 113 that is configured to provide decoded video based on the sets of pixel values determined by the intra-prediction performed on the blocks to be decoded.

Geodesic curves of different defined curvatures may be used in the intra-prediction for different pixels of the current block to be decoded. Additionally or alternatively, geodesic curves of identical defined curvatures may be used in the intra-prediction for different pixels of the current block to be decoded.

The intra-prediction unit 112 may be further configured to use a directional intra-prediction mode for choosing one or more parameters of the geodesic curve.

The intra-prediction unit 112 may be further configured to use a flag to indicate whether to perform the intra-prediction along the geodesic curve.

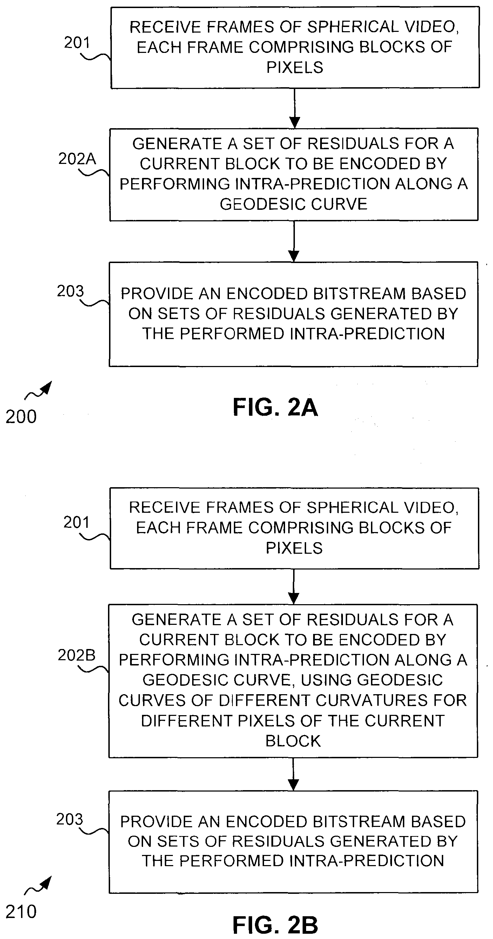

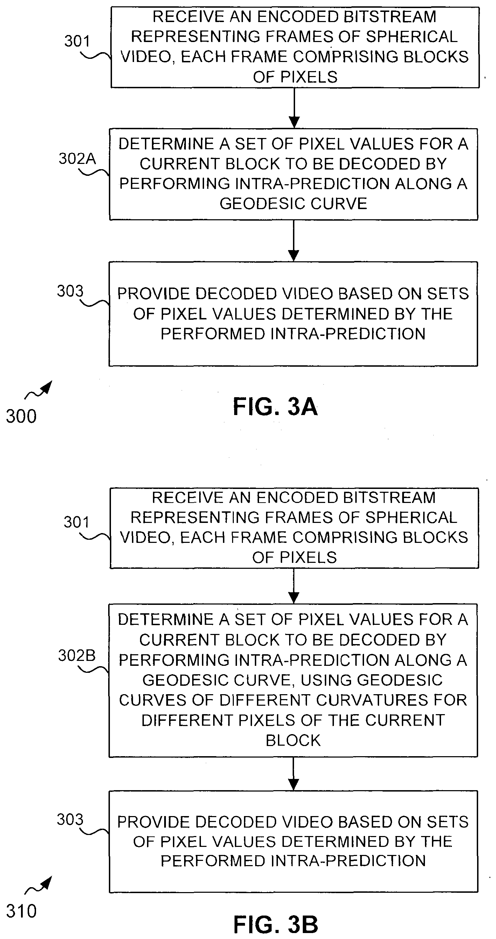

In the following examples of FIGS. 2A to 2E, the video encoder may comprise the video encoder 100 of FIG. 1A. Furthermore, in the examples of FIGS. 3A to 3E, the video decoder may comprise the video decoder 110 of FIG. 1B. Some of the features of the described devices are optional features which provide further advantages.

Fig. 2A is a flow chart illustrating a method of encoding video according to an example. At operation 201, an input unit of a video encoder receives frames of spherical video. Each of the frames comprises blocks of pixels.

At operation 202A, an intra-prediction unit of the video encoder generates a set of residuals for a current block to be encoded, by performing intra-prediction along a geodesic curve for the current block to be encoded. The geodesic curve with its curvature corresponds to a straight line in a three-dimensional scene represented by the spherical video. Furthermore, the intra-prediction is performed for a planar projection of the spherical video.

At operation 203, an output unit of the video encoder provides an encoded bitstream based on sets of residuals generated by the intra-prediction performed on the blocks to be encoded.

Fig. 2B is a flow chart illustrating a method of encoding video according to an example. At operation 201, an input unit of a video encoder receives frames of spherical video. Each of the frames comprises blocks of pixels.

At operation 202B, an intra-prediction unit of the video encoder generates a set of residuals for a current block to be encoded, by performing intra-prediction along a geodesic curve for the current block to be encoded, and by using geodesic curves of different defined curvatures in the intra-prediction for different pixels of the current block to be encoded. The geodesic curve with its curvature corresponds to a straight line in a three-dimensional scene represented by the spherical video. Furthermore, the intra-prediction is performed for a planar projection of the spherical video.

At operation 203, an output unit of the video encoder provides an encoded bitstream based on sets of residuals generated by the intra-prediction performed on the blocks to be encoded.

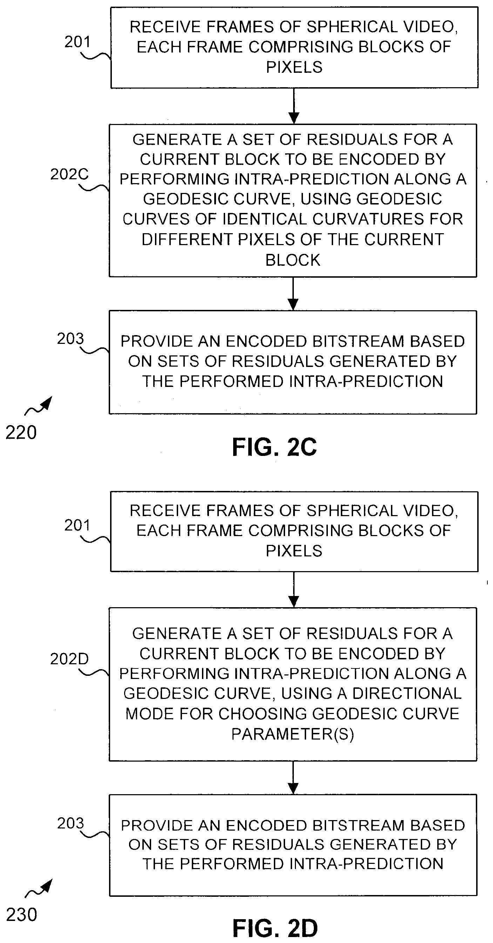

Fig. 2C is a flow chart illustrating a method of encoding video according to an example. At operation 201, an input unit of a video encoder receives frames of spherical video. Each of the frames comprises blocks of pixels.

At operation 202C, an intra-prediction unit of the video encoder generates a set of residuals for a current block to be encoded, by performing intra-prediction along a geodesic curve for the current block to be encoded, and by using geodesic curves of identical defined curvatures in the intra-prediction for different pixels of the current block to be encoded. The geodesic curve with its curvature corresponds to a straight line in a three-dimensional scene represented by the spherical video. Furthermore, the intra-prediction is performed for a planar projection of the spherical video.

At operation 203, an output unit of the video encoder provides an encoded bitstream based on sets of residuals generated by the intra-prediction performed on the blocks to be encoded.

Fig. 2D is a flow chart illustrating a method of encoding video according to an example. At operation 201, an input unit of a video encoder receives frames of spherical video. Each of the frames comprises blocks of pixels.

At operation 202D, an intra-prediction unit of the video encoder generates a set of residuals for a current block to be encoded, by performing intra-prediction along a geodesic curve for the current block to be encoded, and by using a directional intra-prediction mode for choosing one or more parameters of the geodesic curve. The geodesic curve with its curvature corresponds to a straight line in a three-dimensional scene represented by the spherical video. Furthermore, the intra-prediction is performed for a planar projection of the spherical video.

At operation 203, an output unit of the video encoder provides an encoded bitstream based on sets of residuals generated by the intra-prediction performed on the blocks to be encoded.

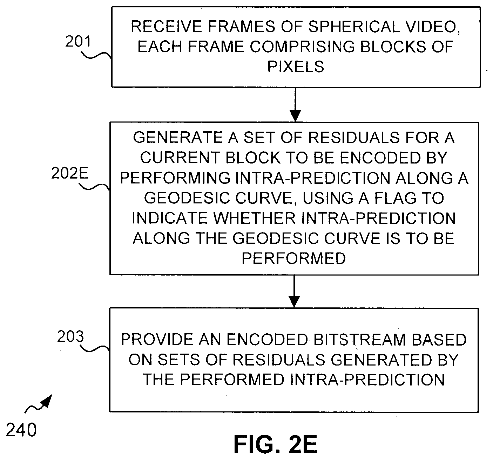

Fig. 2E is a flow chart illustrating a method of encoding video according to an example. At operation 201, an input unit of a video encoder receives frames of spherical video. Each of the frames comprises blocks of pixels.

At operation 202E, an intra-prediction unit of the video encoder generates a set of residuals for a current block to be encoded, by performing intra-prediction along a geodesic curve for the current block to be encoded, and using a flag to indicate whether to perform the intra-prediction along the geodesic curve. The geodesic curve with its curvature corresponds to a straight line in a three-dimensional scene represented by the spherical video. Furthermore, the intra-prediction is performed for a planar projection of the spherical video.

At operation 203, an output unit of the video encoder provides an encoded bitstream based on sets of residuals generated by the intra-prediction performed on the blocks to be encoded.

Fig. 3A is a flow chart illustrating a method of decoding video according to an example. At operation 301, an input unit of a video decoder receives an encoded bitstream representing frames of spherical video. Each of the frames comprises blocks of pixels.

At operation 302A, an intra-prediction unit of the video decoder determines a set of pixel values for a current block to be decoded, by performing intra-prediction along a geodesic curve for the current block to be decoded. The geodesic curve with its curvature corresponds to a straight line in a three-dimensional scene represented by the spherical video. Furthermore, the intra-prediction is performed for a planar projection of the spherical video.

At operation 303, an output unit of the video decoder provides decoded video based on the sets of pixel values determined by the intra-prediction performed on the blocks to be decoded.

Fig. 3B is a flow chart illustrating a method of decoding video according to an example. At operation 301, an input unit of a video decoder receives an encoded bitstream representing frames of spherical video. Each of the frames comprises blocks of pixels.

At operation 302B, an intra-prediction unit of the video decoder determines a set of pixel values for a current block to be decoded, by performing intra-prediction along a geodesic curve for the current block to be decoded, and by using geodesic curves of different defined curvatures in the intra-prediction for different pixels of the current block to be encoded. The geodesic curve with its curvature corresponds to a straight line in a three-dimensional scene represented by the spherical video. Furthermore, the intra-prediction is performed for a planar projection of the spherical video.

At operation 303, an output unit of the video decoder provides decoded video based on the sets of pixel values determined by the intra-prediction performed on the blocks to be decoded.

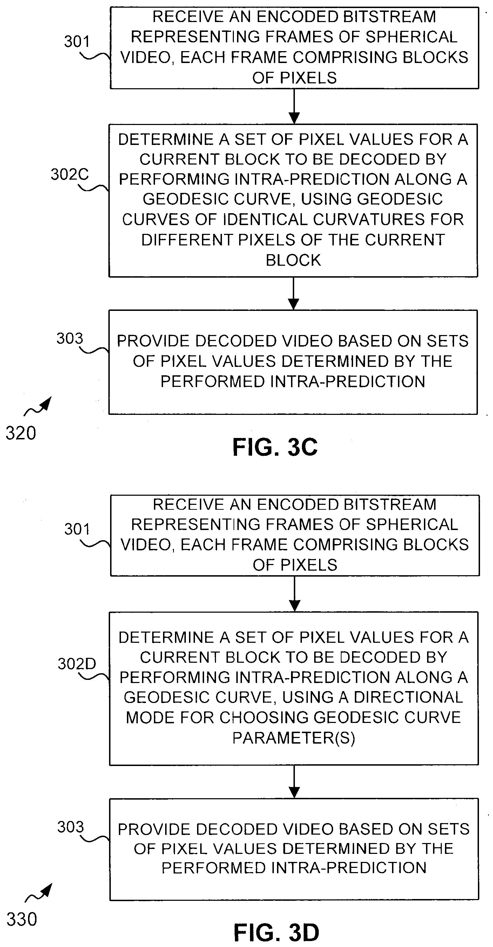

Fig. 3C is a flow chart illustrating a method of decoding video according to an example. At operation 301, an input unit of a video decoder receives an encoded bitstream representing frames of spherical video. Each of the frames comprises blocks of pixels.

At operation 302C, an intra-prediction unit of the video decoder determines a set of pixel values for a current block to be decoded, by performing intra-prediction along a geodesic curve for the current block to be decoded, and by using geodesic curves of identical defined curvatures in the intra-prediction for different pixels of the current block to be encoded. The geodesic curve with its curvature corresponds to a straight line in a three-dimensional scene represented by the spherical video. Furthermore, the intra-prediction is performed for a planar projection of the spherical video.

At operation 303, an output unit of the video decoder provides decoded video based on the sets of pixel values determined by the intra-prediction performed on the blocks to be decoded.

Fig. 3D is a flow chart illustrating a method of decoding video according to an example. At operation 301, an input unit of a video decoder receives an encoded bitstream representing frames of spherical video. Each of the frames comprises blocks of pixels.

At operation 302D, an intra-prediction unit of the video decoder determines a set of pixel values for a current block to be decoded, by performing intra-prediction along a geodesic curve for the current block to be decoded, and by using a directional intra-prediction mode for choosing one or more parameters of the geodesic curve. The geodesic curve with its curvature corresponds to a straight line in a three-dimensional scene represented by the spherical video. Furthermore, the intra-prediction is performed for a planar projection of the spherical video.

At operation 303, an output unit of the video decoder provides decoded video based on the sets of pixel values determined by the intra-prediction performed on the blocks to be decoded.

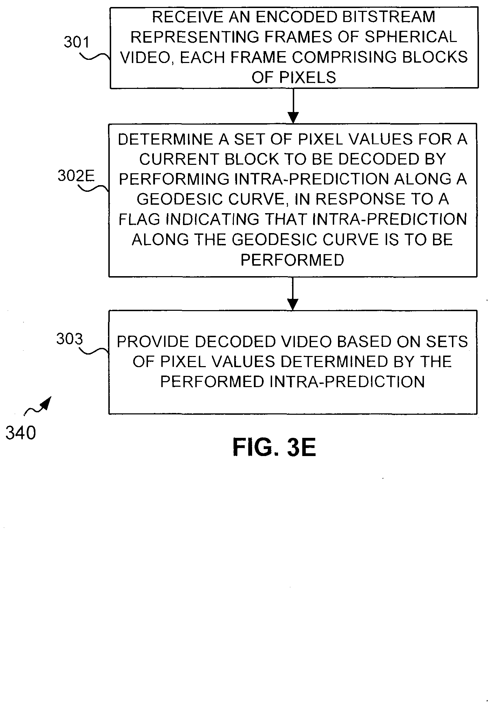

Fig. 3E is a flow chart illustrating a method of decoding video according to an example. At operation 301, an input unit of a video decoder receives an encoded bitstream representing frames of spherical video. Each of the frames comprises blocks of pixels.

At operation 302E, an intra-prediction unit of the video decoder determines a set of pixel values for a current block to be decoded, by performing intra-prediction along a geodesic curve for the current block to be decoded in response to a flag indicating that intra-prediction along the geodesic curve is to be performed. The geodesic curve with its curvature corresponds to a straight line in a three-dimensional scene represented by the spherical video. Furthermore, the intra-prediction is be performed for a planar projection of the spherical video.

At operation 303, an output unit of the video decoder provides decoded video based on the sets of pixel values determined by the intra-prediction performed on the blocks to be decoded.

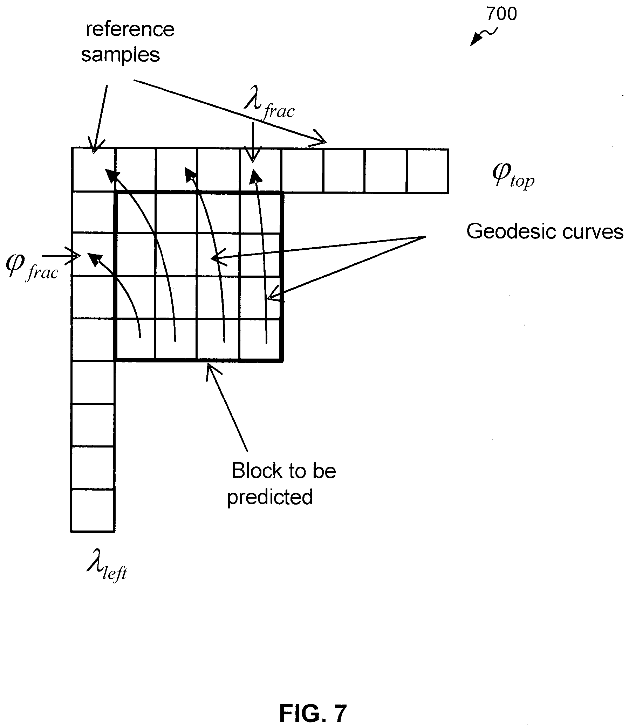

FIG. 7 further illustrates an example 700 of intra-prediction along geodesic curves in accordance with the examples of FIGS. 1A-3E.

As discussed above, a geodesic curve is a part of a great circle. The great circle is a circle on the viewing sphere inside the plane defined by the straight line and the sphere's center. When the elevation angle of an azimuth angle of 0 is $\Theta$, the great circle can be expressed as:

$$\varphi = \tan^{-1}(\tan\theta\cos\lambda)$$

Equirectangular projection has the following equations for forward projection:

$$x = (\lambda - \lambda_0) * \cos\varphi_0$$

$$y = (\varphi - \varphi_0)$$

and for backward projection:

$$\lambda = \frac{x}{\cos\varphi_0} + \lambda_0$$

$$\varphi = y + \varphi_0$$

where $\varphi, \lambda$ are the spherical coordinates of a pixel on the viewing sphere, $x, y$ are corresponding coordinates on the equirectangular projection, are $\varphi_0, \lambda_0$ spherical coordinates of a standard parallel and central meridian, e.g., the starting point of a spherical coordinate system.

When $\varphi_0 = 0$; $\lambda_0 = 0$ the conversion equations become:

$$x = \lambda$$

$$y = \varphi.$$

Unfolding from the spherical to equirectangular projection transforms the great circles (i.e. the intra-prediction lines on the viewing sphere) into curves, as shown in FIG. 5. As discussed above, prediction may be performed along these curves.

As discussed above in connection with FIG. 4, an infinite number of lines (or parts of circles or arcs) may pass through two points on a sphere. Only one of them is lying on a great circle. That means that once the position of two points of a line on a viewing sphere is known, one and only one geodesic curve can be determined coming through these two points. Here, one of the points may be a current pixel to be predicted. The other point may vary depending on the implementation. For example, the starting point of the coordinate system may be shifted to this other point. The shifting of the starting point may be applied, e.g., during the conversion from the equirectangular projection to the spherical coordinates, and vice versa. Alternatively, the starting shift may be taken directly in equations. In that case, the great circle equation will be:

$$\varphi = \tan^{-1}(\tan\theta\cos(\lambda - \lambda_0)) + \varphi_0.$$

It is to be understood that the starting point may alternatively be defined in picture projection coordinates instead of spherical coordinates.

Again referring to FIG. 7, the intra-prediction along geodesic curves may include operations in which for each pixel to be predicted with picture position $x,y$ :

A1. the pixel position is converted to spherical coordinates, with the starting point of the coordinate system set to $\varphi_0, \lambda_0$ :

$$\lambda = \frac{x}{\cos\varphi_0} + \lambda_0$$

$$\varphi = y + \varphi_0$$

A2. the elevation angle of the geodesic line coming through this point to the starting point of the coordinate system is defined as:

$$\theta = \tan^{-1}\left(\frac{\tan\varphi}{\cos\lambda}\right)$$

A3. the coordinate of a pixel lying on the reference line is defined using:

$$\varphi_{frac} = \tan^{-1}\left(\frac{\tan\theta}{\cos\lambda_{left}}\right)$$

for prediction from a horizontal reference, and

$$\lambda_{frac} = \cos^{-1}\left(\frac{\tan\varphi_{top}}{\tan\theta}\right)$$

for prediction from a vertical reference, where $\varphi_{top}, \lambda_{left}$ are the coordinates of top and left reference lines, respectively, and $\varphi_{frac}, \lambda_{frac}$ are the defined fractional positions on the reference line A4. the fractional position is converted back to the picture position coordinates:

$$x = (\lambda - \lambda_0) * \cos\varphi_0$$

$$y = (\varphi - \varphi_0)$$

A5. the predicted pixel value is interpolated using fractional reference coordinates with a suitable interpolation method.

By applying different 2D-to-sphere conversion formulas on the above operations 1 and 4, this can be adopted to any type of sphere-to-2D projection rather than only to equirectangular projection.

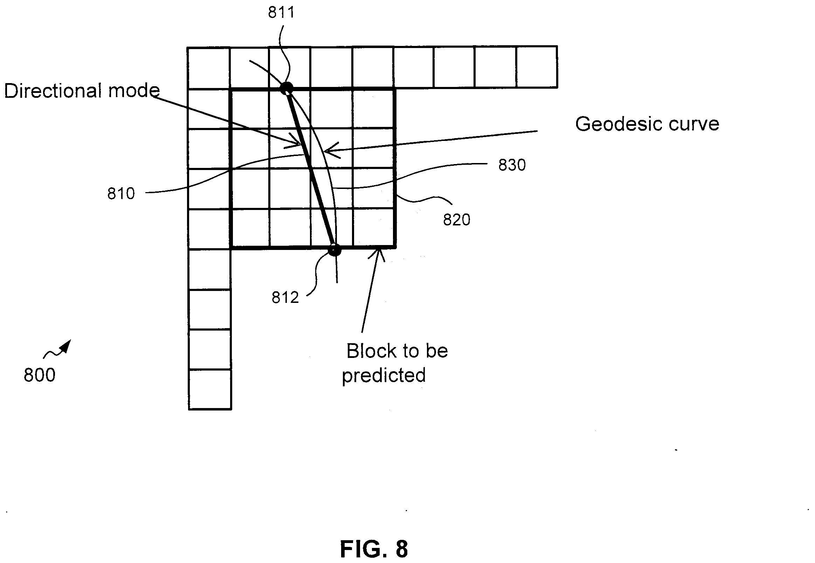

Fig. 8 further illustrates an example 800 of using directional intra-prediction modes together with intra-prediction along geodesic curves in accordance with the examples of FIGS. 1A-3E.

Here, a straight line 810 goes across the block 820 (e.g., through block center) with an angle that corresponds to a directional intra-prediction mode. Two points inside the current block and lying on this line 810 are selected, e.g., the points 811, 812 in which the line 810 crosses the border of the block 820. Alternatively, e.g., the center of the block 820 may be chosen as the first point, and another point located at a distance of, e.g., 1 pixel from the first one may be chosen as the second point. In other words, an angular or directional intra-prediction mode is used as a tangent to a geodesic curve 830. By choosing different angular intra-prediction modes it is possible to select geodesic curves of different parameters.

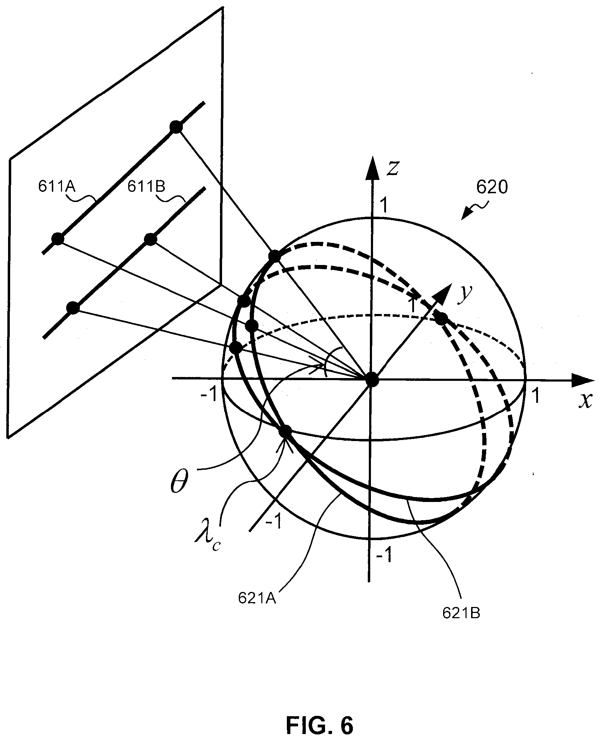

Furthermore, here parallel lines 611A, 611B are projected into two great circles 621A, 621B on a unit sphere 620 crossing in some point on the equator with coordinates $\varphi = 0$, $\lambda = \lambda_c$, as shown in the example of FIG. 6. This point may be chosen by a given angular direction, and all geodesic curves for the current block may be drawn through this point. Thus, the associated intra-prediction operations may include:

For a given angular direction:

B1. two points inside the current block (or in the neighborhood of the current block) are chosen lying on a straight line with an angle according to the given angular direction. As an example, these may be the two points 811, 812 in which the straight line 810 coming through the center of the block 820 crosses the block borders (FIG. 8).

B2. they are converted to spherical coordinates with the starting point at $\varphi_0 = 0; \lambda_0 = 0$ using:

$$\lambda = x$$

$$\varphi = y$$

B3. the position of a point in which the great circle coming through the given two points crosses the equator is obtained by solving the equation:

$$\lambda_o = \tan^{-1}\left(\frac{\cos\lambda_1 - \frac{tg\varphi_1}{tg\varphi_2}\cos\lambda_2}{\sin\lambda_1 - \frac{tg\varphi_1}{tg\varphi_2}\sin\lambda_2}\right)$$

where $\varphi_1, \lambda_1$ and $\varphi_2, \lambda_2$ are the spherical coordinates of the two points 811, 812 selected above in step 1

B4. the starting point of the spherical coordinate system for next steps is chosen as:

$$\lambda = \lambda_0$$

$$\varphi = 0$$

B5. for each point in the block to be predicted, the above described intra-prediction operations A1-A5 may then be performed.

The above operations B1-B5 allow geodesic intra-prediction in different directions using a signaling mechanism based on angular prediction intra-prediction modes.

The functionality described herein can be performed, at least in part, by one or more computer program product components such as software components. According to an embodiment, the video encoder 100 and/or video decoder 110 comprise a processor configured by program code to execute the embodiments of the operations and functionality described. Alternatively, or in addition, the functionality described herein can be performed, at least in part, by one or more hardware logic components. For example, and without limitation, illustrative types of hardware logic components that can be used include Field-programmable Gate Arrays (FPGAs), Program-specific Integrated Circuits (ASICs), Program-specific Standard Products (ASSPs), System-on-a-chip systems (SOCs), Complex Programmable Logic Devices (CPLDs), and Graphics Processing Units (GPUs).

**Claims**

1. A video encoder (100), comprising:

   an input unit (101) configured to receive frames of spherical video, each of the frames comprising blocks of pixels;
   an intra-prediction unit (102) configured to generate a set of residuals for a current block to be encoded, by performing intra-prediction along a geodesic curve for the current block to be encoded, wherein the geodesic curve with its curvature corresponds to a straight line in a three-dimensional scene represented by the spherical video, wherein the intra-prediction unit (102) is configured to perform the intra-prediction for a planar projection of the spherical video by using a directional intra-prediction mode defining a tangent to the geodesic curve; and
   an output unit (103) configured to provide an encoded bitstream based on sets of residuals generated by the intra-prediction performed on the blocks to be encoded and including the directional intra-prediction mode.

2. The video encoder (100) according to claim **1**, wherein geodesic curves of different defined curvatures are used in the intra-prediction for different pixels of the current block to be encoded.

3. The video encoder (100) according to claim **1**, wherein geodesic curves of identical defined curvatures are used in the intra-prediction for different pixels of the current block to be encoded.

4. The video encoder (100) according to any of claims 1 to 3, wherein the intra-prediction unit (102) is further configured to use a flag to indicate whether to perform the intra-prediction along the geodesic curve.

5. A system comprising a video encoder according to one of the claims 1 to 4 and a video decoder (110), the video decoder (110) comprising:

   an input unit (111) configured to receive the encoded bitstream representing frames of spherical video, each of the frames comprising blocks of pixels;
   an intra-prediction unit (112) configured to determine a set of pixel values for a current block to be decoded using a set of residuals for the current block and a directional intra-prediction mode in the received encoded bitstream, by performing intra-prediction along a geodesic curve for the current block to be decoded, wherein the geodesic curve with its curvature corresponds to a straight line in a three-dimensional scene represented by the spherical video and wherein the intra-prediction unit (112) is configured to perform the intra-prediction for a planar projection of the spherical video by using the directional intra-prediction mode, the directional intra-prediction mode defining a tangent to the geodesic curve; and

an output unit (113) configured to provide decoded video based on the sets of pixel values determined by the intra-prediction performed on the blocks to be decoded.

6. The system according to claim 5, wherein geodesic curves of different defined curvatures are used in the intra-prediction for different pixels of the current block to be decoded.

7. The system according to claim 5, wherein geodesic curves of identical defined curvatures are used in the intra-prediction for different pixels of the current block to be decoded.

8. A method (200-240) of encoding video, comprising:

receiving (201), by an input unit of a video encoder, frames of spherical video, each of the frames comprising blocks of pixels;
generating (202A-202E), by an intra-prediction unit of the video encoder, a set of residuals for a current block to be encoded, by performing intra-prediction along a geodesic curve for the current block to be encoded and by performing the intra-prediction for a planar projection of the spherical video by using a directional intra-prediction mode defining a tangent to the geodesic curve, wherein the geodesic curve with its curvature corresponds to a straight line in a three-dimensional scene represented by the spherical video; and
providing (203), by an output unit of the video encoder, an encoded bitstream based on sets of residuals generated by the intra-prediction performed on the blocks to be encoded and including the directional intra-prediction mode.

9. A computer program comprising program code configured to perform a method according to claim 8, when the computer program is executed on a computer.

10. A method (300-340) of encoding and decoding video, comprising the method of claim 8 and further comprising:

receiving (301), by an input unit of a video decoder, the encoded bitstream representing frames of spherical video, each of the frames comprising blocks of pixels;
determining (302A-302E), by an intra-prediction unit of the video decoder, a set of pixel values for a current block to be decoded using a set of residuals for the current block and a directional intra-prediction mode in the received encoded bitstream, by performing intra-prediction along a geodesic curve for the current block to be decoded, wherein the geodesic curve with its curvature corresponds to a straight line in a three-dimensional scene represented by the spherical video, and wherein the intra-prediction is performed for a planar projection of the spherical video by using the directional intra-prediction mode, the directional intra-prediction mode defining a tangent to the geodesic curve; and
providing (303), by an output unit of the video decoder, decoded video based on the sets of pixel values determined by the intra-prediction performed on the blocks to be decoded.

**Patentansprüche**

1. Videocodierer (100), umfassend:

eine Eingabeeinheit (101), die dazu konfiguriert ist, Frames eines sphärischen Videos zu empfangen, wobei jeder der Frames Blöcke von Pixeln umfasst;
eine Intraprädiktionseinheit (102), die dazu konfiguriert ist, einen Satz von Residuen für einen zu codierenden aktuellen Block zu generieren, durch Durchführen von Intraprädiktion entlang einer geodätischen Kurve für den zu codierenden aktuellen Block, wobei die geodätische Kurve mit ihrer Krümmung einer geraden Linie in einer dreidimensionalen Szene entspricht, die durch das sphärische Video dargestellt wird, wobei die Intraprädiktionseinheit (102) dazu konfiguriert ist, die Intraprädiktion für eine planare Projektion des sphärischen Videos unter Verwendung eines gerichteten Intraprädiktionsmodus durchzuführen, der eine Tangente an die geodätische Kurve definiert; und
eine Ausgabeeinheit (103), die dazu konfiguriert ist, einen codierten Bitstrom basierend auf Sätzen von Residuen bereitzustellen, die durch die Intraprädiktion generiert werden, die an den zu codierenden Blöcken durchgeführt wird, und die den gerichteten Intraprädiktionsmodus beinhaltet.

2. Videocodierer (100) gemäß Anspruch 1, wobei geodätische Kurven mit unterschiedlichen definierten Krümmungen in der Intraprädiktion für unterschiedliche Pixel des zu codierenden aktuellen Blocks verwendet werden.

3. Videocodierer (100) gemäß Anspruch 1, wobei geodätische Kurven mit identischen definierten Krümmungen in der Intraprädiktion für unterschiedliche Pixel des zu codierenden aktuellen Blocks verwendet werden.

4. Videocodierer (100) gemäß einem der Ansprüche 1 bis 3, wobei die Intraprädiktionseinheit (102) ferner dazu konfiguriert ist, ein Kennzeichen zu verwenden, um anzugeben, ob die Intraprädiktion entlang der geodätischen Kurve durchzuführen ist.

5. System, umfassend einen Videocodierer gemäß einem der Ansprüche 1 bis 4 und einen Videodecodierer (110), wobei der Videodecodierer (110) Folgendes umfasst:

   eine Eingabeeinheit (111), die dazu konfiguriert ist, den codierten Bitstrom zu empfangen, der Frames eines sphärischen Videos darstellt, wobei jeder der Frames Blöcke von Pixeln umfasst; eine Intraprädiktionseinheit (112), die dazu konfiguriert ist, einen Satz von Pixelwerten für einen zu decodierenden aktuellen Block unter Verwendung eines Satzes von Residuen für den aktuellen Block und eines gerichteten Intraprädiktionsmodus in dem empfangenen codierten Bitstrom zu bestimmen, durch Durchführen von Intraprädiktion entlang einer geodätischen Kurve für den zu decodierenden aktuellen Block, wobei die geodätische Kurve mit ihrer Krümmung einer geraden Linie in einer dreidimensionalen Szene entspricht, die durch das sphärische Video dargestellt wird und wobei die Intraprädiktionseinheit (112) dazu konfiguriert ist, die Intraprädiktion für eine planare Projektion des sphärischen Videos unter Verwendung des gerichteten Intraprädiktionsmodus durchzuführen, wobei der gerichtete Intraprädiktionsmodus eine Tangente an die geodätische Kurve definiert; und eine Ausgabeeinheit (113), die dazu konfiguriert ist, ein decodiertes Video basierend auf den Sätzen von Pixelwerten bereitzustellen, die durch die Intraprädiktion bestimmt werden, die an den zu decodierenden Blöcken durchgeführt wird.

6. System gemäß Anspruch 5, wobei geodätische Kurven mit unterschiedlichen definierten Krümmungen in der Intraprädiktion für unterschiedliche Pixel des zu decodierenden aktuellen Blocks verwendet werden.

7. System gemäß Anspruch 5, wobei geodätische Kurven mit identischen definierten Krümmungen in der Intraprädiktion für unterschiedliche Pixel des zu decodierenden aktuellen Blocks verwendet werden.

8. Verfahren (200-240) zum Codieren von Video, umfassend:

   Empfangen (201) von Frames eines sphärischen Videos durch eine Eingabeeinheit eines Videocodierers, wobei jeder der Frames Blöcke von Pixeln umfasst; Generieren (202A-202E) eines Satzes von Residuen für einen zu codierenden aktuellen Block durch eine Intraprädiktionseinheit des Videocodierers, durch Durchführen von Intraprädiktion entlang einer geodätischen Kurve für den zu codierenden aktuellen Block und durch Durchführen der Intraprädiktion für eine planare Projektion des sphärischen Videos unter Verwendung eines gerichteten Intraprädiktionsmodus, der eine Tangente an die geodätische Kurve definiert, wobei die geodätische Kurve mit ihrer Krümmung einer geraden Linie in einer dreidimensionalen Szene entspricht, die durch das sphärische Video dargestellt wird; und Bereitstellen (203) eines codierten Bitstroms durch eine Ausgabeeinheit des Videocodierers, basierend auf Sätzen von Residuen, die durch die Intraprädiktion generiert werden, die an den zu codierenden Blöcken durchgeführt wird und die den gerichteten Intraprädiktionsmodus beinhaltet.

9. Computerprogramm umfassend Programmcode, der dazu konfiguriert ist, ein Verfahren gemäß Anspruch 8 durchzuführen, wenn das Computerprogramm auf einem Computer ausgeführt wird.

10. Verfahren (300-340) zum Codieren und Decodieren von Video, umfassend das Verfahren gemäß Anspruch 8 und ferner Folgendes umfassend:

   Empfangen (301) des codierten Bitstroms, der Frames eines sphärischen Videos darstellt, wobei jeder der Frames Blöcke von Pixeln umfasst, durch eine Eingabeeinheit eines Videodecodierers; Bestimmen (302A-302E) eines Satzes von Pixelwerten für einen zu decodierenden aktuellen Block durch eine Intraprädiktionseinheit des Videodecodierers unter Verwendung eines Satzes von Residuen für den aktuellen Block und eines gerichteten Intraprädiktionsmodus in dem empfangenen codierten Bitstrom, durch Durchführen von Intraprädiktion entlang einer geodätischen Kurve für den zu decodierenden aktuellen Block, wobei die geodätische Kurve mit ihrer Krümmung einer geraden Linie in einer dreidimensionalen Szene entspricht, die durch das sphärische Video dargestellt wird, und wobei die Intraprädiktion für eine planare Projektion des sphärischen Videos unter Verwendung des gerichteten Intraprädiktionsmodus durchgeführt wird, wobei der gerichtete Intraprädiktionsmodus eine Tangente an die geodätische Kurve definiert; und

Bereitstellen (303) eines decodierten Videos durch eine Ausgabeeinheit des Videodecodierers, basierend auf den Sätzen von Pixelwerten, die durch die Intraprädiktion bestimmt werden, die an den zu decodierenden Blöcken durchgeführt wird.

## Revendications

1. Codeur vidéo (100), comprenant :

une unité d'entrée (101) configurée pour recevoir des trames de vidéo sphérique, chacune des trames comprenant des blocs de pixels ; une unité d'intraprédiction (102) configurée pour générer un ensemble de résidus pour un bloc actuel à coder, en réalisant une intraprédiction le long d'une courbe géodésique pour le bloc actuel à coder, dans lequel la courbe géodésique avec sa courbure correspondant à une ligne droite dans une scène tridimensionnelle représentée par la vidéo sphérique, dans lequel l'unité d'intraprédiction (102) est configurée pour réaliser l'intraprédiction pour une projection plane de la vidéo sphérique à l'aide d'un mode d'intraprédiction directionnel définissant une tangente à la courbe géodésique ; et une unité de sortie (103) configurée pour fournir un flux binaire codé sur la base des ensembles de résidus générés par l'intraprédiction réalisée sur les blocs à coder et comportant le mode d'intraprédiction directionnel.

2. Codeur vidéo (100) selon la revendication 1, dans lequel des courbes géodésiques de différentes courbures définies sont utilisées dans l'intraprédiction pour différents pixels du bloc actuel à coder.

3. Codeur vidéo (100) selon la revendication 1, dans lequel des courbes géodésiques de courbures définies identiques sont utilisées dans l'intraprédiction pour différents pixels du bloc actuel à coder.

4. Codeur vidéo (100) selon l'une quelconque des revendications 1 à 3, dans lequel l'unité d'intraprédiction (102) est également configurée pour utiliser un indicateur pour indiquer s'il faut réaliser l'intraprédiction le long de la courbe géodésique.

5. Système comprenant un codeur vidéo selon l'une des revendications 1 à 4 et un décodeur vidéo (110), le décodeur vidéo (110) comprenant :

une unité d'entrée (111) configurée pour recevoir le flux binaire codé représentant des trames de vidéo sphérique, chacune des trames comprenant des blocs de pixels ; une unité d'intraprédiction (112) configurée pour déterminer un ensemble de valeurs de pixels pour un bloc actuel à décoder à l'aide d'un ensemble de résidus pour le bloc actuel et d'un mode d'intraprédiction directionnel dans le flux binaire codé reçu, en réalisant l'intraprédiction le long d'une courbe géodésique pour le bloc actuel à décoder, dans lequel la courbe géodésique avec sa courbure correspond à une ligne droite dans une scène tridimensionnelle représentée par la vidéo sphérique et dans lequel l'unité d'intraprédiction (112) est configurée pour réaliser l'intraprédiction pour une projection plane de la vidéo sphérique à l'aide du mode d'intraprédiction directionnel, le mode d'intraprédiction directionnel définissant une tangente à la courbe géodésique ; et une unité de sortie (113) configurée pour fournir une vidéo décodée sur la base des ensembles de valeurs de pixels déterminés par l'intraprédiction réalisée sur les blocs à décoder.

6. Système selon la revendication 5, dans lequel des courbes géodésiques de différentes courbures définies sont utilisées dans l'intraprédiction pour différents pixels du bloc actuel à décoder.

7. Système selon la revendication 5, dans lequel des courbes géodésiques de différentes courbures définies identiques sont utilisées dans l'intraprédiction pour différents pixels du bloc actuel à décoder.

8. Procédé (200-240) de codage vidéo, comprenant :

la réception (201), par une unité d'entrée d'un codeur vidéo, de trames de vidéo sphérique, chacune des trames comprenant des blocs de pixels ; la génération (202A-202E), par une unité d'intraprédiction du codeur vidéo, d'un ensemble de résidus pour un bloc actuel à coder, en réalisant l'intraprédiction le long d'une courbe géodésique pour le bloc actuel à coder et en réalisant l'intraprédiction pour une projection plane de la vidéo sphérique à l'aide d'un mode d'intraprédiction directionnel définissant une tangente à la courbe géodésique, dans lequel la courbe géodésique avec sa courbure correspond à une ligne droite dans une scène tridimensionnelle représentée par la vidéo sphérique ; et la fourniture (203), par une unité de sortie d'un codeur vidéo, d'un flux binaire codé sur la base des ensembles de résidus générés par l'intraprédiction réalisée sur les blocs à coder et comportant le mode d'intraprédiction directionnel.

9. Programme informatique comprenant un code de programme conçu pour réaliser un procédé selon la revendication 8, lorsque le programme informatique est exécuté sur un ordinateur.

10. Procédé (300-340) de codage et de décodage de vidéo, comprenant le procédé selon la revendication 8 et comprenant également :

la réception (301), par une unité d'entrée d'un décodeur vidéo, du flux binaire codé représentant des trames de vidéo sphérique, chacune des trames comprenant des blocs de pixels ; la détermination (302A-302E), par une unité d'intraprédiction d'un décodeur vidéo, d'un ensemble de valeurs de pixels pour un bloc actuel à décoder à l'aide d'un ensemble de résidus pour le bloc actuel et d'un mode d'intraprédiction directionnel dans le flux binaire codé reçu, en réalisant l'intraprédiction le long d'une courbe géodésique pour le bloc actuel à décoder, dans lequel la courbe géodésique avec sa courbure correspond à une ligne droite dans une scène tridimensionnelle représentée par la vidéo sphérique et dans lequel l'intraprédiction est réalisée pour une projection plane de la vidéo sphérique à l'aide du mode d'intraprédiction directionnel, le mode d'intraprédiction directionnel définissant une tangente à la courbe géodésique ; et la fourniture (303), par une unité de sortie du décodeur vidéo, d'une vidéo décodée sur la base des ensembles de valeurs de pixels déterminés par l'intraprédiction réalisée sur les blocs à décoder.

100

VIDEO ENCODER

101

INPUT

102

INTRA-
PREDICTION

103

OUTPUT

FIG. 1A

110

VIDEO DECODER

111

INPUT

112

INTRA-
PREDICTION

113

OUTPUT

FIG. 1B

201 ⌇ RECEIVE FRAMES OF SPHERICAL VIDEO, EACH FRAME COMPRISING BLOCKS OF PIXELS

202A ⌇ GENERATE A SET OF RESIDUALS FOR A CURRENT BLOCK TO BE ENCODED BY PERFORMING INTRA-PREDICTION ALONG A GEODESIC CURVE

203 ⌇ PROVIDE AN ENCODED BITSTREAM BASED ON SETS OF RESIDUALS GENERATED BY THE PERFORMED INTRA-PREDICTION

200

**FIG. 2A**

201 ⌇ RECEIVE FRAMES OF SPHERICAL VIDEO, EACH FRAME COMPRISING BLOCKS OF PIXELS

202B ⌇ GENERATE A SET OF RESIDUALS FOR A CURRENT BLOCK TO BE ENCODED BY PERFORMING INTRA-PREDICTION ALONG A GEODESIC CURVE, USING GEODESIC CURVES OF DIFFERENT CURVATURES FOR DIFFERENT PIXELS OF THE CURRENT BLOCK

203 ⌇ PROVIDE AN ENCODED BITSTREAM BASED ON SETS OF RESIDUALS GENERATED BY THE PERFORMED INTRA-PREDICTION

210

**FIG. 2B**

201 RECEIVE FRAMES OF SPHERICAL VIDEO, EACH FRAME COMPRISING BLOCKS OF PIXELS

202C GENERATE A SET OF RESIDUALS FOR A CURRENT BLOCK TO BE ENCODED BY PERFORMING INTRA-PREDICTION ALONG A GEODESIC CURVE, USING GEODESIC CURVES OF IDENTICAL CURVATURES FOR DIFFERENT PIXELS OF THE CURRENT BLOCK

203 PROVIDE AN ENCODED BITSTREAM BASED ON SETS OF RESIDUALS GENERATED BY THE PERFORMED INTRA-PREDICTION

220

**FIG. 2C**

201 RECEIVE FRAMES OF SPHERICAL VIDEO, EACH FRAME COMPRISING BLOCKS OF PIXELS

202D GENERATE A SET OF RESIDUALS FOR A CURRENT BLOCK TO BE ENCODED BY PERFORMING INTRA-PREDICTION ALONG A GEODESIC CURVE, USING A DIRECTIONAL MODE FOR CHOOSING GEODESIC CURVE PARAMETER(S)

203 PROVIDE AN ENCODED BITSTREAM BASED ON SETS OF RESIDUALS GENERATED BY THE PERFORMED INTRA-PREDICTION

230

**FIG. 2D**

201 — RECEIVE FRAMES OF SPHERICAL VIDEO, EACH FRAME COMPRISING BLOCKS OF PIXELS

202E — GENERATE A SET OF RESIDUALS FOR A CURRENT BLOCK TO BE ENCODED BY PERFORMING INTRA-PREDICTION ALONG A GEODESIC CURVE, USING A FLAG TO INDICATE WHETHER INTRA-PREDICTION ALONG THE GEODESIC CURVE IS TO BE PERFORMED

203 — PROVIDE AN ENCODED BITSTREAM BASED ON SETS OF RESIDUALS GENERATED BY THE PERFORMED INTRA-PREDICTION

240

**FIG. 2E**

301

RECEIVE AN ENCODED BITSTREAM
REPRESENTING FRAMES OF SPHERICAL
VIDEO, EACH FRAME COMPRISING BLOCKS
OF PIXELS

302A

DETERMINE A SET OF PIXEL VALUES FOR A
CURRENT BLOCK TO BE DECODED BY
PERFORMING INTRA-PREDICTION ALONG A
GEODESIC CURVE

303

PROVIDE DECODED VIDEO BASED ON SETS
OF PIXEL VALUES DETERMINED BY THE
PERFORMED INTRA-PREDICTION

300

**FIG. 3A**

301

RECEIVE AN ENCODED BITSTREAM
REPRESENTING FRAMES OF SPHERICAL
VIDEO, EACH FRAME COMPRISING BLOCKS
OF PIXELS

302B

DETERMINE A SET OF PIXEL VALUES FOR A
CURRENT BLOCK TO BE DECODED BY
PERFORMING INTRA-PREDICTION ALONG A
GEODESIC CURVE, USING GEODESIC
CURVES OF DIFFERENT CURVATURES FOR
DIFFERENT PIXELS OF THE CURRENT
BLOCK

303

PROVIDE DECODED VIDEO BASED ON SETS
OF PIXEL VALUES DETERMINED BY THE
PERFORMED INTRA-PREDICTION

310

**FIG. 3B**

301 | RECEIVE AN ENCODED BITSTREAM REPRESENTING FRAMES OF SPHERICAL VIDEO, EACH FRAME COMPRISING BLOCKS OF PIXELS

302C | DETERMINE A SET OF PIXEL VALUES FOR A CURRENT BLOCK TO BE DECODED BY PERFORMING INTRA-PREDICTION ALONG A GEODESIC CURVE, USING GEODESIC CURVES OF IDENTICAL CURVATURES FOR DIFFERENT PIXELS OF THE CURRENT BLOCK

303 | PROVIDE DECODED VIDEO BASED ON SETS OF PIXEL VALUES DETERMINED BY THE PERFORMED INTRA-PREDICTION

320

**FIG. 3C**

301 | RECEIVE AN ENCODED BITSTREAM REPRESENTING FRAMES OF SPHERICAL VIDEO, EACH FRAME COMPRISING BLOCKS OF PIXELS

302D | DETERMINE A SET OF PIXEL VALUES FOR A CURRENT BLOCK TO BE DECODED BY PERFORMING INTRA-PREDICTION ALONG A GEODESIC CURVE, USING A DIRECTIONAL MODE FOR CHOOSING GEODESIC CURVE PARAMETER(S)

303 | PROVIDE DECODED VIDEO BASED ON SETS OF PIXEL VALUES DETERMINED BY THE PERFORMED INTRA-PREDICTION

330

**FIG. 3D**

```
        ┌─────────────────────────────────────┐
        │      RECEIVE AN ENCODED BITSTREAM    │
  301   │    REPRESENTING FRAMES OF SPHERICAL  │
        │  VIDEO, EACH FRAME COMPRISING BLOCKS │
        │               OF PIXELS              │
        └─────────────────────────────────────┘
                          │
                          ▼
        ┌─────────────────────────────────────┐
        │ DETERMINE A SET OF PIXEL VALUES FOR A│
        │     CURRENT BLOCK TO BE DECODED BY   │
  302E  │  PERFORMING INTRA-PREDICTION ALONG A │
        │   GEODESIC CURVE, IN RESPONSE TO A   │
        │ FLAG INDICATING THAT INTRA-PREDICTION│
        │  ALONG THE GEODESIC CURVE IS TO BE   │
        │              PERFORMED               │
        └─────────────────────────────────────┘
                          │
                          ▼
  303   ┌─────────────────────────────────────┐
        │  PROVIDE DECODED VIDEO BASED ON SETS │
        │   OF PIXEL VALUES DETERMINED BY THE  │
        │      PERFORMED INTRA-PREDICTION      │
        └─────────────────────────────────────┘

  340
```

**FIG. 3E**

**FIG. 4**

FIG. 5

500

**FIG. 6**

reference
samples

$\lambda_{frac}$

$\varphi_{top}$

Geodesic curves

$\varphi_{frac}$

Block to be
predicted

$\lambda_{left}$

700

**FIG. 7**

FIG. 8

**REFERENCES CITED IN THE DESCRIPTION**

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- US 2016142697 A1

**Non-patent literature cited in the description**

- **JANI LAINEMA et al.** Chapter 4 Intra-Picture Prediction in HEVC''In: ''High Efficiency Video Coding (HEVC). Springer International Publishing, 01 August 2014, vol. 29, 91-112